# FASCICULE DE BREVET EUROPEEN

(11) **EP 2 819 920 B1**
(45) Date de publication et mention de la délivrance du brevet: **06.04.2016**
(21) Numéro de dépôt: 13711075.5
(22) Date de dépôt: 28.02.2013
(51) Int. Cl.: B64D 33/04, B64D 29/06, F02K 1/72, F01D 25/24

(54) **NACELLE APLATIE DE TURBORÉACTEUR**
ABGEFLACHTE GONDEL EINES TL-TRIEBWERKS
FLATTENED NACELLE OF A TURBOJET ENGINE

(30) Priorité: 02.03.2012 FR 1251948
(43) Date de publication de la demande: 07.01.2015
(73) Titulaire: Aircelle, 76700 Gonfreville L'Orcher (FR)
(72) Inventeur: JORET, Jean-Philippe, F-27210 Beuzeville (FR); BOUTEILLER, Xavier, F-76600 Le Havre (FR); CAZUC, Xavier, F-76610 Le Havre Rouelles (FR); CARUEL, Pierre, F-76600 Le Havre (FR)
(74) Mandataire: Gaillarde, Frédéric F. Ch.
(86) Numéro de dépôt international: PCT/FR2013/050418
(87) Numéro de publication internationale: WO 2013/128129

(56) Documents cités:
- EP-A2- 2 278 147
- FR-A1- 2 960 918
- US-A1- 2009 301 056
- US-A1- 2010 229 528

## Description

La présente invention se rapporte à une nacelle d'un ensemble propulsif d'aéronef munie d'un dispositif d'inversion de poussée à grilles de déviation de flux.

Un aéronef est mû par plusieurs turboréacteurs logés, chacun, dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent, notamment, un dispositif mécanique d'inversion de poussée.

L'ensemble propulsif de l'aéronef formé de la nacelle et du turboréacteur est destiné à être suspendu à une structure fixe de l'aéronef, par exemple sous une aile ou sur le fuselage, par l'intermédiaire d'un pylône de suspension.

La nacelle présente généralement une structure tubulaire comprenant une entrée d'air en amont du turboréacteur, une section médiane destinée à entourer une soufflante du turboréacteur, une section aval abritant les moyens d'inversion de poussée et destinée à entourer une chambre de combustion et les turbines du turboréacteur, et est généralement terminée par une tuyère d'éjection dont la sortie est située en aval du turboréacteur.

Cette nacelle peut être destinée à abriter un turboréacteur double flux, à savoir un turboréacteur apte à générer un flux d'air chaud (également appelé flux primaire) issu de la chambre de combustion du turboréacteur, et par l'intermédiaire des aubes de la soufflante en rotation et un flux d'air froid (flux secondaire) qui circule à l'extérieur du turboréacteur à travers une veine d'écoulement du flux d'air froid.

Une structure externe dite OFS (Outer Fan Structure en termes anglo-saxons), abritant les moyens d'inversion de poussée, et une structure interne, dite IFS (Inner Fan Structure en termes anglo-saxons), qui entoure la structure du moteur proprement dite en arrière de la soufflante, destinée à couvrir une section aval du turboréacteur, appartenant toutes deux à la section aval de la nacelle, définissent la veine d'écoulement du flux d'air froid et ainsi une section de passage du flux d'air froid.

Concernant le dispositif d'inversion de poussée, il est adapté pour, lors de l'atterrissage de l'aéronef, améliorer la capacité de freinage de celui-ci en redirigeant vers l'avant au moins une partie de la poussée générée par le turboréacteur.

Durant cette phase, il obstrue la veine d'écoulement du flux d'air froid et dirige ce dernier vers l'avant de la nacelle, générant de ce fait une contre-poussée qui vient s'ajouter au freinage des roues de l'aéronef.

US 2010/022 9528 A1 divulgue une nacelle avec les caractéristiques du préambule de la revendication 1.

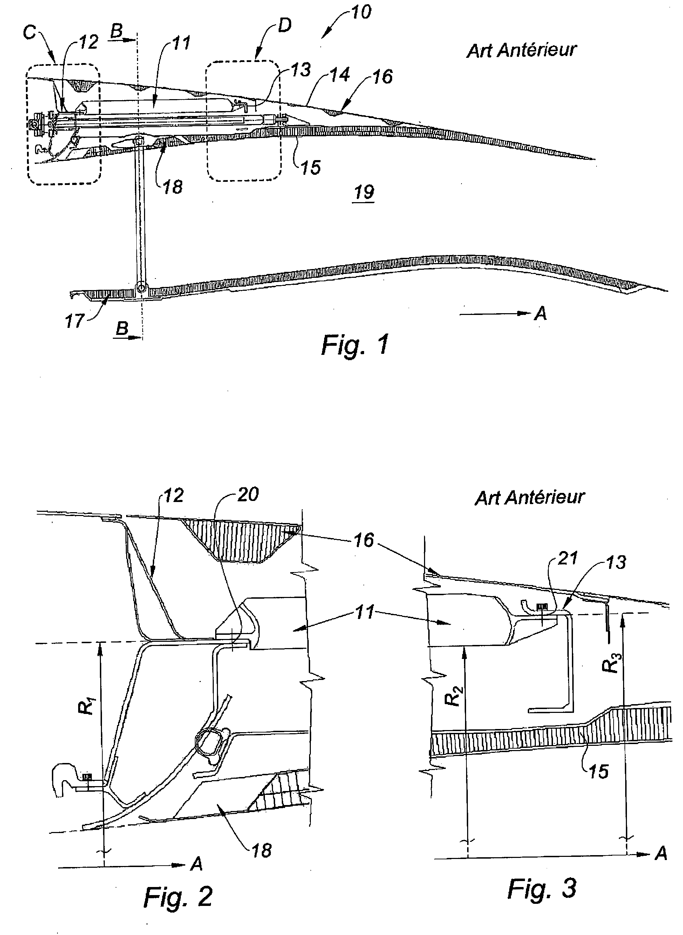

Les figures 1 a à 4 montrent un exemple connu de réalisation d'un inverseur de poussée.

Cet inverseur 10 est composé d'une structure fixe (un cadre avant 12, des grilles 11, un cadre arrière 13 et l'IFS 17) et d'une structure mobile.

Plus précisément, cet inverseur de poussée 10 comporte une pluralité de grilles de déviation 11, fixées entre le cadre avant 12 périphérique et le cadre arrière 13 périphérique fixe qui, généralement, rejoint entre eux un panneau externe 14 et un panneau interne 15 d'un capot d'inversion de poussée mobile 16.

En fonctionnement, la réorientation du flux secondaire, dans la position jet inverse, est effectuée par ces grilles de déviation 11, le capot mobile 16 ayant principalement une fonction de coulissage visant à découvrir ou recouvrir ces grilles de déviation 11, la translation du capot mobile 16 s'effectuant selon un axe longitudinal sensiblement parallèle à un axe A central du turboréacteur.

Des portes de blocage complémentaires, également appelées volets 18, activées par le coulissement du capot 16, permettent une fermeture de la veine 19 d'écoulement du flux secondaire, en aval des grilles 11 de manière à permettre la réorientation du flux secondaire vers les grilles de déviation 11.

Ces volets 18 sont montés pivotants sur le capot 16 coulissant entre une position rétractée dans laquelle ils assurent, avec ledit capot 16 mobile, la continuité aérodynamique de la paroi interne du capot 16 et une position déployée dans laquelle, en situation d'inversion de poussée, ils viennent obturer au moins partiellement la veine 19 en vue de dévier le flux secondaire vers les grilles 11 de déviation découvertes par le coulissement du capot 16.

Cet inverseur 10 est monté, classiquement, sur une nacelle sensiblement de révolution autour de l'axe A central du turboréacteur.

Les lignes aérodynamiques de la nacelle permettent un montage de grilles de déviation 11 identiques sur l'ensemble de la circonférence de la veine 19.

Plus particulièrement, comme illustré sur les figures 2, 3 et 4, le montage des grilles 11 est centré sur l'axe central du turboréacteur A sur l'ensemble de la circonférence de la veine 19.

Plus précisément, l'interface de liaison 20 entre le cadre avant et l'extrémité amont de chaque grille est radialement centrée sur l'axe A tout comme l'interface de liaison 21 entre le cadre arrière 13 et l'extrémité aval de chaque grille 11.

Ainsi, le rayon R1 de l'interface de liaison 20 entre le cadre avant 12 et l'extrémité amont de chaque grille 11 est constant pour toutes les liaisons grilles 11 sur le cadre avant 12 sur l'ensemble de la circonférence de la veine 19, tout comme le rayon R3 de l'interface de liaison 21 entre le cadre arrière 13 et l'extrémité aval de chaque grille 11.

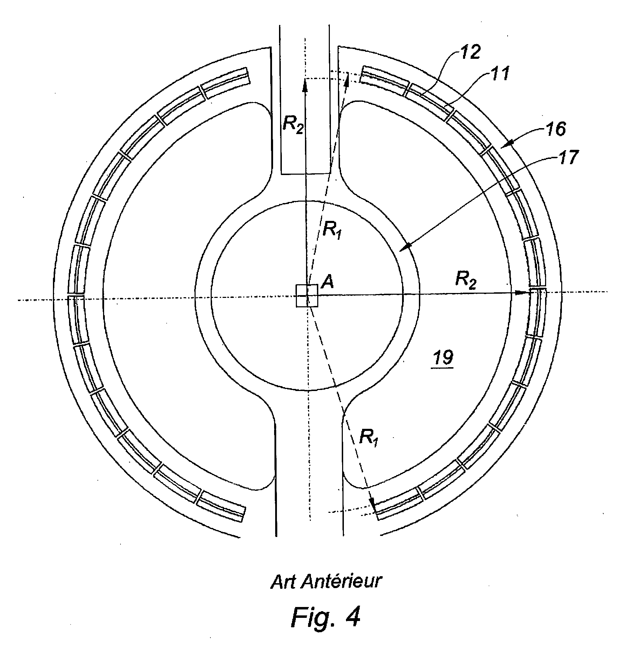

De plus, comme illustré sur les figure 3 et 4, le rayon R2 des aubes de déviation de flux des grilles de déviation 11 défini comme le rayon de la face interne de chaque grille 11 du coté de la veine 19, est également constant sur l'ensemble de la périphérie de la veine 19 d'éjection de flux.

L'installation d'un tel dispositif d'inversion de poussée 10 à grilles sur un turboréacteur sous voilure est rendue complexe lorsque la contrainte de hauteur maximale de la nacelle est critique de part une faible garde au sol de l'aéronef et une proximité entre le turboréacteur et la voilure de l'aéronef.

Une telle installation implique, en outre, une gestion délicate de la section de passage du flux d'air froid.

On a, dès lors, proposé, de réduire la hauteur de la nacelle en proposant une nacelle non de révolution autour de l'axe central A du turboréacteur, dite « nacelle aplatie ».

Une telle nacelle aplatie présente des lignes aérodynamiques réduites dans les zones à 12 heures (i.e. dans la partie supérieure de la nacelle) et à 6 heures (i.e. dans la partie inférieure de la nacelle).

Une telle nacelle n'a a priori pas d'impact sur l'efficacité d'inversion. Toutefois, dans ce cas, il convient d'aménager localement les grilles de déviation de flux 11.

Le montage des grilles de déviation de flux 11 est réalisé en réduisant le rayon R2 des aubes des grilles de déviation 11, qui, de ce fait, n'est plus constant sur l'ensemble de la périphérie de la veine 19.

Cela implique d'utiliser des grilles de déviation 11 spécialement dédiées aux zones des lignes aérodynamiques réduites de la nacelle pour s'adapter à la hauteur de veine ou de capot différente à 12 heures (i.e. dans la partie supérieure de la nacelle) et à 6 heures (i.e. dans la partie inférieure de la nacelle).

Les grilles de déviation 11 montées dans les zones des lignes aérodynamiques réduites de la nacelle ne sont, dès lors, plus interchangeables avec les autres grilles de déviation destinées à être placées sur le reste de la périphérie de la veine.

Les coûts de fabrication sont multipliés du fait de la multiplication des catégories de grilles de déviation à prévoir, des moules et lignes de fabrication associés tout comme les coûts de maintenance.

Un but de la présente invention est donc de remédier à ces inconvénients.

Ainsi, un but de la présente invention est de proposer une nacelle dans laquelle les grilles de déviation sont interchangeables tout en conservant une faible garde au sol de l'aéronef et des dimensions réduites de nacelle.

Il est également désirable de proposer une nacelle offrant la possibilité d'uniformiser le dispositif d'inversion de poussée quelle que soit le type de nacelle.

Un autre but de la présente invention est de proposer une nacelle dans laquelle les coûts de fabrication et de maintenance sont réduits.

A cet effet, l'invention propose une nacelle, comprenant :
- une structure externe munie d'un dispositif d'inversion de poussée et d'un cadre avant,
- une structure interne destinée à couvrir une section aval d'un turboréacteur,
la structure externe et la structure interne définissant une veine d'écoulement d'un flux d'air d'un turboréacteur,
le dispositif d'inversion de poussée comprenant au moins:
- un capot mobile en translation selon une direction parallèle à un axe longitudinal de la nacelle, le capot étant apte à passer alternativement d'une position de fermeture dans laquelle il assure la continuité aérodynamique du cadre avant à une position d'ouverture dans laquelle il ouvre un passage dans la nacelle destiné au flux d'air à dévier, ledit capot présentant une section transversale non constante sur la périphérie de la veine,
- des grilles de déviation d'au moins une partie du flux d'air du turboréacteur au travers de l'ouverture de passage, destinées à être montées sur le cadre avant à leur extrémité amont.

La nacelle est remarquable en ce que la liaison du cadre avant et des grilles de déviation destinées à être montées sur une zone de la section transversale réduite du capot est inscrite sur un rayon centré sur un axe décalé relativement au centre du rayon d'implantation de la liaison du cadre avant et des grilles de déviation destinées à être montées sur le reste de la périphérie du capot.

Grâce à la présente invention, l'inverseur de poussée peut se munir de grilles identiques les unes par rapport aux autres sur l'ensemble de la périphérie de la veine tout en conservant une faible garde au sol de l'aéronef et une nacelle de dimensions réduites.

Suivant d'autres caractéristiques optionnelles de la nacelle selon l'invention, prises seules ou en combinaison :
- la structure externe comprend, en outre, un cadre arrière sur lequel une extrémité aval de chaque grille de déviation est montée, la liaison du cadre arrière et des grilles de déviation destinées à être montées sur la zone de section transversale réduite du capot est inscrite sur un rayon centré sur un axe décalé relativement au centre du rayon d'implantation de la liaison du cadre arrière et des grilles destinées à être montées sur le reste de la périphérie du capot.
- le décalage relatif des centres des rayons d'implantation respectif de chaque grille est configuré de sorte que la distance radiale des grilles relativement à leur centre respectif est identique sur l'ensemble de la périphérie de la veine;
- le cadre avant comprend un élément formant support de grille de déviation conformé pour être centré sur un premier axe dans la zone de section réduite du capot et un second axe sur le reste de la périphérie du capot, décalé relativement au premier axe;
- le cadre arrière comprend un élément formant support de grille de déviation conformé pour être centré sur un troisième axe dans la zone de section réduite du capot et un quatrième axe sur le reste de la périphérie du capot, décalé relativement au troisième axe ;
- l'extrémité amont et/ou aval des grilles est conformée pour être centrée sur un cinquième axe dans la zone de section réduite du capot et un sixième axe sur le reste de la périphérie du capot, décalé relativement au cinquième axe.
- le second, le quatrième et le sixième axes correspondent à l'axe longitudinal de la nacelle ;
- le capot présente une zone de section transversale réduite de part et d'autre de poutres supérieure et/ou inférieure reliées à la nacelle;
- le centre du rayon d'implantation de la liaison du cadre avant ou cadre arrière et des grilles de déviation destinées à être montées sur la zone de section transversale supérieure réduite du capot est différent du centre du rayon d'implantation de la liaison du cadre avant,ou respectivement cadre arrière et des grilles de déviation destinées à être montées sur la zone de section transversale inférieure réduite du capot ;
- les grilles de déviation sont, au moins en partie, mobiles en translation ou en rotation.

L'invention sera davantage comprise à la lecture de la description non limitative qui va suivre, faite en référence aux figures ci-annexées dans lesquelles :
- la figure 1 est une vue en coupe d'un inverseur de poussée en position de jet direct, selon l'art antérieur ;
- les figures 2 et 3 sont les zones agrandies respectivement C et D de la figure 1 ;
- la figure 4 est une vue en coupe transversale d'une section d'éjection d'une nacelle munie de l'inverseur de poussée de la figure 1 ;
- la figure 5 est une vue en coupe transversale d'une section d'éjection d'une nacelle selon un mode de réalisation de la présente invention.

On notera que l'on a pris soin de définir dans la description un repère à trois axes X, Y Z, ces trois axes étant représentatifs :
- de la direction longitudinale du turboréacteur pour l'axe X,
- de la direction menant de l'axe longitudinal du turboréacteur à l'axe longitudinal du pylône pour la direction Z et,
- de la direction orthogonale à X et Z pour l'axe Y.

Dans le cas d'un ensemble propulsif monté sous aile d'un aéronef, l'axe Z est généralement vertical.

Dans la description ci-après, l'axe vertical sera assimilé à l'axe Z, même si l'ensemble propulsif d'aéronef est monté dans une autre configuration, tel que par exemple en fuselage arrière, ceci à des fins de simplification.

On notera également que les termes amont et aval s'entendent par rapport au sens de l'écoulement de l'air dans le turboréacteur en fonctionnement normal de jet direct.

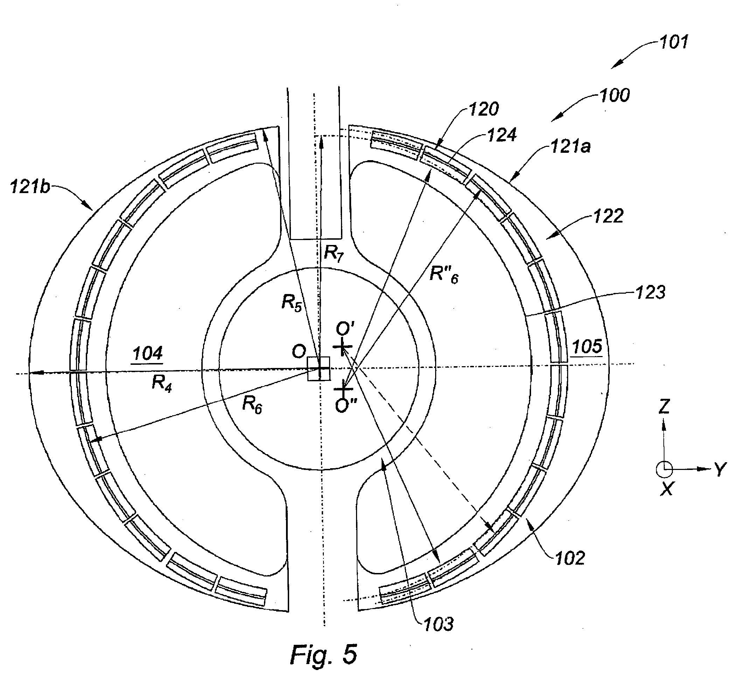

Un inverseur de poussée 100 d'une nacelle 101 d'un ensemble propulsif d'aéronef selon une première forme de réalisation de l'invention est représenté à la figure 5.

Celui-ci équipe une nacelle 101 du type de celle exposée précédemment en référence aux figures 1 à 4 aux différences suivantes.

La section aval de la nacelle 101 comprend une structure externe dite OFS 102 comportant le dispositif d'inversion de poussée 100 et une structure interne 103 dite IFS de carénage du turboréacteur (non illustré) définissant avec la structure externe 102, une veine 104 destinée à la circulation et l'échappement du flux d'air froid.

Dans une première variante de réalisation, la veine 104 d'échappement du flux d'air froid est de révolution autour de l'axe longitudinal X, axe central du turboréacteur et de la nacelle.

Dans une variante alternative, la veine 104 d'échappement du flux d'air froid peut ne pas être de révolution autour de l'axe longitudinal X.

L'inverseur de poussée 100 est, quant à lui, un inverseur à grilles 120 de déviation du flux froid.

Ainsi, cet inverseur 100 comprend un capot 121 mobile monté en translation, selon une direction sensiblement parallèle à l'axe X longitudinal de la nacelle 101, par rapport à une structure fixe de la nacelle 101 comprenant au moins un cadre avant (non visible sur la figure).

Ce cadre avant fixe, destiné à être monté en aval d'une virole externe d'un carter moteur du turboréacteur, ferme l'épaisseur de la nacelle 101 en amont du capot 121 et supporte directement ou indirectement au moins les grilles 120 de déviation de flux.

Le cadre avant comporte une paroi externe destinée à supporter la peau externe de la nacelle 101, une paroi interne, tournée du côté de la veine 104 et présentant un bord de déviation de forme générale arrondie à laquelle est fixé un caisson de torsion.

Le cadre avant comporte, en outre, un élément formant support directement ou indirectement des grilles 120 de déviation de flux et, plus particulièrement, un anneau externe permettant la fixation des grilles de déviation 120.

Par ailleurs, le capot 121 est monté en aval du cadre avant et de manière mobile par rapport à celui-ci, entre une position de jet direct et une position d'inversion de poussée.

Plus précisément, le capot 121 comprend une virole externe 122 disposée dans le prolongement de celle du cadre avant en position de jet direct et une virole interne 123 qui vient en continuité du cadre avant et est destinée à délimiter, dans une position de jet direct du turboréacteur une paroi externe de la veine 104 dans laquelle s'écoule le flux d'air froid.

Les viroles interne et externe 123,122 se rejoignent dans une zone médiane du capot et délimitent entre elles, en amont de ladite zone médiane, un logement 105 central débouchant vers l'amont. Le logement 105 est destiné à accueillir les grilles de déviation 120 du flux secondaire en position de jet direct, comme cela représenté à la figure 5.

Par ailleurs, le capot 121 est apte à passer alternativement d'une position de fermeture dans laquelle il assure la continuité aérodynamique des lignes de la structure fixe de la nacelle 101 et couvre les grilles de déviation 120, à une position d'ouverture, en aval de la nacelle 101, dans laquelle il ouvre un passage dans la nacelle 101 et découvre les grilles de déviation 120.

Dans sa position d'ouverture, le capot 121 permet au flux d'air froid du turboréacteur de s'échapper au moins partiellement, cette portion de flux étant réorientée vers l'amont de la nacelle 101, notamment par les grilles de déviation 120 découvertes, générant de ce fait une contre-poussée apte à aider au freinage de l'aéronef.

En référence plus particulièrement à la figure 5, la section transversale, dans le plan YZ, du capot 121 n'est pas constante sur la périphérie de la veine 104.

Plus particulièrement, sa forme et ses dimensions sont adaptées de manière à proposer un logement 105 asymétrique, dont les dimensions sont plus importantes en direction horizontale Y qu'en direction verticale Z du capot 121.

Le capot 121 présente une section aplatie de part et d'autre de poutres supérieure et/ou inférieure (non illustrées) solidaires d'un pylône de suspension (non illustré) de l'ensemble propulsif d'aéronef, de manière à être compatible avec la faible garde au sol de l'aéronef et la proximité de la voilure.

Ces poutres supérieure et inférieure de la nacelle sont situées verticalement aux positions dites 6 heures et 12 heures.

Le capot 121 présente, dès lors, une zone de section transversale réduite de part et d'autre des poutres supérieure et/ou inférieure reliées au pylône sur une distance angulaire limitée, c'est-à-dire en partie supérieure et/ou inférieure de la nacelle 101.

La hauteur selon Z du capot 121 (et par conséquent, du logement 105) est ainsi réduite en partie supérieure et/ou inférieure de la nacelle 101.

Le capot est formé de deux demi capots 121a,121b curvilignes adaptés pour que le dispositif d'inversion de poussée 100 présente un encombrement réduit verticalement.

Plus particulièrement, l'ensemble des deux demi capots 121a,121b présente une forme ellipsoïdale dont le grand axe est parallèle à l'axe Y et le petit axe est parallèle à l'axe Z.

Plus précisément, la virole externe 122 de chaque demi-capot 121 a, 121 b, sur les lignes aérodynamiques de la nacelle, n'est pas centrée sur un point O qui coincide avec l'axe central longitudinal X et n'est pas circulaire en section tranversale tandis que la structure interne de la nacelle 101 est centrée sur ledit point O.

Ainsi, le rayon R5 de la virole externe 122 de chaque demi-capot 121a,121b , de part et d'autre des poutres supérieure et/ou inférieure du pylône, est inférieure au rayon R4 de ladite virole externe 122 selon l'axe Y.

Les rayons R4 et R5 sont déterminés à partie du point O.

On réduit, ainsi, la hauteur du capot 121 en partie supérieure et/ou inférieure de la nacelle 101 définissant, sur ces parties, une zone de section transversale réduite du capot 121 sur la distance angulaire susmentionnée.

Concernant les grilles 120 de déviation, elles sont disposées dans une zone annulaire, de manière adjacente les unes par rapport aux autres. Le terme adjacent ne signifie pas nécessairement que les grilles 120 soient disposées bord à bord.

Chaque grille 120 s'étend entre une extrémité amont 124 fixée sur le cadre avant et une extrémité aval fixée sur une ferrure ou un cadre arrière (non visible), fixe par rapport aux poutres longitudinales supérieure et inférieure, non référencées sur le dessin, elles-mêmes fixes par rapport au cadre avant.

Comme cela apparaît à la figure 5, chaque grille 120 se présente sous la forme d'une portion tronconique c'est-à-dire que les extrémités amont 124 et aval de chaque grille 120 présentent une forme d'arc de cercle.

Chaque grille 120 s'étend obliquement ou parallèlement par rapport à l'axe de déplacement du capot mobile 121 selon une génératrice respectivement oblique ou droite, formant un angle avec l'axe de déplacement X du capot mobile 121 dans le premier cas.

Pour monter de tels grilles 120 de déviation sur le cadre avant, l'anneau externe du cadre avant présente une zone périphérique en forme générale de portion de cylindre, situé radialement au niveau de l'extrémité amont 124 desdites grilles 120, suivant une génératrice parallèle à l'axe X de déplacement du capot 121.

Il en est de même à l'extrémité aval des grilles 120 pour le cadre arrière auquel sont fixées les grilles 120.

Ainsi, le cadre arrière situé radialement au niveau de l'extrémité aval 124 desdites grilles 120 présente une forme générale en portion de cylindre et s'étend suivant une génératrice parallèle à l'axe X.

Suivant sa position sur la périphérie du capot 121 et de la veine 104, l'interface de liaison entre le cadre avant et les grilles 120 est configurée de sorte que le rayon d'implantation des grilles 120 diffère dans le plan radial YZ.

Plus particulièrement, l'interface de liaison entre le cadre avant et les grilles 120, en zone de section transversale réduite du capot 121, est configurée de manière à être centrée sur un point correspondant à un axe décalé relativement à l'axe central de la nacelle, comme illustré sur la figure 5.

Plus précisément, la liaison du cadre avant et des grilles de déviation 120, en zone de section transversale réduite du capot 121 (dans l'exemple, à 12h), est inscrite sur un rayon R"6 dit « rayon de liaison amont », centré sur un axe O" décalé relativement au centre O (axe central X) du rayon de liaison amont R6 de la liaison du cadre avant et des grilles de déviation 120 montées sur le reste de la périphérie du capot 121.

Dans une variante de réalisation, c'est l'anneau externe du cadre avant qui est conformé pour être centré sur le premier axe O" dans la zone de section réduite du capot 121 et le second axe O sur le reste de la périphérie du capot 121.

Dans une seconde variante non exclusive de la première, c'est l'extrémité amont 124 des grilles 120 qui est conformée pour être centrée sur l'axe O" dans la zone de section réduite du capot 121 et l'axe O sur le reste de la périphérie du capot 121.

Le décalage relatif des centres O et O" des rayons d'implantation respectif de chaque grille 120 est configuré de sorte que la distance radiale R6 et R"6 des grilles 120 relativement à leur centre respectif est identique sur l'ensemble de la périphérie de la veine 104 et du capot 121.

Avantageusement, le rayon de liaison amont des grilles 120 est, dès lors, de valeur constante sur l'ensemble de la périphérie de la veine 104 de la nacelle aplatie.

Comme illustré sur la figure 5, pour respecter une telle constance, le centre O" du rayon d'implantation de la liaison du cadre avant et des grilles 120 de déviation montées sur la zone de section transversale supérieure réduite du capot 121 est différent du centre O' du rayon d'implantation de la liaison du cadre avant et des grilles de déviation 120 montées sur la zone de section transversale inférieure réduite du capot 121.

L'exposé précedent en référence à la liaison amont des grilles 120 est également valable pour l'interface de liaison entre le cadre arrière (non visible) et l'extrémité aval 124 de chaque grille 120 dont le rayon dit « rayon de liaison aval » des grilles est constant sur l'ensemble de la périphérie de la veine de la nacelle aplatie.

Dans ce cadre, la liaison du cadre arrière et des grilles de déviation 120 montées sur la zone de section transversale réduite du capot 121 est inscrite sur un rayon centré sur un axe décalé relativement au centre O du rayon d'implantation de la liaison du cadre arrière et des grilles 120 montées sur le reste de la périphérie du capot 121.

Dans une variante de réalisation, le cadre arrière comprend un élément formant support des grilles de déviation 120 conformé pour être centré sur un premier axe dans la zone de section réduite du capot 121 et l'axe central O sur le reste de la périphérie du capot 121, décalé relativement au premier axe.

Par ailleurs, les grilles 120 sont configurées de sorte que le rayon R7 de la face interne des grilles 120 est, également, de valeur constante sur l'ensemble de la périphérie de la veine de la nacelle 101 aplatie.

Ainsi, comme illustré sur la Figure 5, en zone de section transversale du capot 121, les deux premières grilles de la zone 12h et les deux dernières grilles de la zone 6h ne sont pas sur un rayon d'implantation dont le centre est l'axe central X.

Les deux premières grilles de la zone 12h et les deux dernières grilles de la zone 6h sont, respectivement, sur un rayon d'implantation dont le centre est O" et O'.

Le nombre de deux grilles est un exemple non limitatif de la présente invention. Ainsi, plus ou moins de grilles peuvent être concernées par ce rayon d'implantation décalé.

Le rayon de la face interne des grilles 120, le rayon de liaison aval des grilles 120 et le rayon de liaison amont des grilles 120 montées sur la zone de section transversale réduite du capot 121 sont des rayons de valeur identique aux rayons respectifs des grilles montées sur la périphérie restante du capot 121, mais leurs centres respectifs sont décalés par rapport à l'axe central X /point O.

Grâce à l'invention, l'inverseur de poussée 100 peut se munir de grilles 120 identiques les unes par rapport aux autres sur l'ensemble de la périphérie de la veine de la nacelle 101 aplatie.

Elles sont, avantageusement, devenues interchangeables, réduisant, de fait, les coûts de fabrication et de maintenance de l'inverseur 100.

Dans une variante de réalisation, les grilles de déviation 120 peuvent être autosupportées c'est-à-dire qu'elles sont assemblées uniquement fixées entre elles et au cadre avant, sans cadre arrière.

Dans une seconde variante de réalisation, les grilles de déviation 120 peuvent être translatables au moins en partie selon une direction parallèle à l'axe central X de la nacelle ou rotatives.

Bien que l'invention ait été décrite avec des modes particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

Ainsi, on peut envisager tout type de capot 121 en C-duct en D-duct ou en O-duct.

## Revendications

1. Nacelle, comprenant :
- une structure externe (102) munie d'un dispositif d'inversion de poussée (100) et d'un cadre avant,
- une structure interne (103) destinée à couvrir une section aval d'un turboréacteur,
la structure externe et la structure interne définissant une veine (104) d'écoulement d'un flux d'air d'un turboréacteur,
le dispositif d'inversion de poussée (100) comprenant au moins:
- un capot (121) mobile en translation selon une direction parallèle à un axe longitudinal de la nacelle, le capot étant apte à passer alternativement d'une position de fermeture dans laquelle il assure la continuité aérodynamique du cadre avant à une position d'ouverture dans laquelle il ouvre un passage dans la nacelle destiné au flux d'air à dévier, ledit capot présentant une section transversale non constante sur la périphérie de la veine,
- des grilles (120) de déviation d'au moins une partie du flux d'air du turboréacteur au travers de l'ouverture de passage, destinées à être montées sur le cadre avant à leur extrémité amont,
la nacelle est **caractérisée en ce que** la liaison du cadre avant et des grilles de déviation (120) destinées à être montées sur une zone de la section transversale réduite du capot (121) est centrée sur un premier axe décalé relativement à un second axe sur lequel est centrée la liaison du cadre avant et des grilles de déviation (120) destinées à être montées sur le reste de la périphérie du capot (121).

2. Nacelle selon la revendication 1 dans laquelle la structure externe (103) comprend, en outre, un cadre arrière sur lequel une extrémité aval de chaque grille de déviation (120) est montée, la liaison du cadre arrière et des grilles de déviation (120) destinées à être montées sur la zone de section transversale réduite du capot (121) est centrée sur un axe décalé relativement à un axe sur lequel est centrée la liaison du cadre arrière et des grilles destinées à être montées sur le reste de la périphérie du capot (121).

3. Nacelle selon l'une des revendications 1 à 2 dans laquelle le décalage relatif des axes sur lesquels est respectivement centrée chaque grille (120) est configuré de sorte que la distance radiale des grilles (120) relativement à leur centre respectif est identique sur l'ensemble de la périphérie de la veine.

4. Nacelle selon l'une des revendications 1 à 3 dans laquelle le cadre avant comprend un élément formant support de grille de déviation (120) conformé pour être centré sur un premier axe dans la zone de section réduite du capot (121) et un second axe sur le reste de la périphérie du capot (121), décalé relativement au premier axe.

5. Nacelle selon l'une des revendications 2 à 4 dans laquelle le cadre arrière comprend un élément formant support de grille de déviation conformé pour être centré sur un troisième axe dans la zone de section réduite du capot et un quatrième axe sur le reste de la périphérie du capot, décalé relativement au troisième axe.

6. Nacelle selon l'une des revendications 1 à 4 dans laquelle l'extrémité amont et/ou aval des grilles (120) est conformée pour être centrée sur un cinquième axe dans la zone de section réduite du capot (121) et un sixième axe sur le reste de la périphérie du capot (121), décalé relativement au cinquième axe.

7. Nacelle selon les revendications 4 à 6 dans laquelle le second, le quatrième et le sixième axes correspondent à l'axe longitudinal de la nacelle.

8. Nacelle selon la revendication 1 dans laquelle le capot (121) présente une zone de section transversale réduite de part et d'autre de poutres supérieure et/ou inférieure reliées à la nacelle.

9. Nacelle selon les revendications 2 et 8 dans laquelle l'axe (O") sur lequel est centré la liaison du cadre avant ou cadre arrière et des grilles de déviation (120) destinées à être montées sur la zone de section transversale supérieure réduite du capot (121) est différent de l'axe (O') sur lequel est centré la liaison du cadre avant, ou respectivement cadre arrière, et des grilles (121) de déviation destinées à être montées sur la zone de section transversale inférieure réduite du capot.

10. Nacelle selon la revendication 1 dans laquelle les grilles de déviation sont, au moins en partie, mobiles en translation ou en rotation.

## Patentansprüche

1. Gondel, folgendes umfassend:
- eine äußere Struktur (102), die mit einer Schubumkehrvorrichtung (100) und einem vorderen Rahmen ausgestattet ist,
- eine innere Struktur (103), die dazu bestimmt ist, einen stromabwärts befindlichen Abschnitt eines Turbotriebwerks abzudecken,
wobei die äußere Struktur und die innere Struktur eine Strömungsbahn (104) eines Luftstroms eines Turbotriebwerks definieren,
wobei die Schubumkehrvorrichtung (100) zumindest folgendes umfasst:
- eine in Längsrichtung in eine Richtung parallel zu einer Längsachse der Gondel bewegliche Abdeckung (121), wobei die Abdeckung in der Lage ist, abwechselnd von einer Schließposition, in der sie für die aerodynamische Kontinuität des vorderen Rahmens sorgt, in eine Öffnungsposition überzugehen, in der sie einen Durchlass in der Gondel öffnet, der für eine Umleitung des Luftstroms bestimmt ist, wobei die besagte Abdeckung am Umfang der Strömungsbahn einen nicht konstanten Querschnitt aufweist,
- Gitter (120) zum Umleiten zumindest eines Teils des Luftstroms des Turbotriebwerks durch die Durchlassöffnung hindurch, die dazu bestimmt sind, an ihrem stromaufwärts befindlichen Ende am vorderen Rahmen montiert zu werden,
wobei die Gondel **dadurch gekennzeichnet ist, dass** die Verbindung des vorderen Rahmens und der Umleitgitter (120), die dazu bestimmt sind, in einem Bereich des verringerten Querschnitts der Abdeckung (121) montiert zu werden, auf einer ersten Achse zentriert ist, die im Verhältnis zu einer zweiten Achse versetzt ist, auf der die Verbindung des vorderen Rahmens und der Umleitgitter (120) zentriert ist, die dazu bestimmt sind, auf dem verbleibenden Umfang der Abdeckung (121) montiert zu werden.

2. Gondel nach Anspruch 1, wobei die äußere Struktur (103) darüber hinaus einen hinteren Rahmen umfasst, auf dem ein stromabwärts befindliches Ende eines jeden Umleitgitters (120) montiert ist, wobei die Verbindung des hinteren Rahmens und der Umleitgitter (120), die dazu bestimmt sind, in einem Bereich des verringerten Querschnitts der Abdeckung (121) montiert zu werden, auf einer ersten Achse zentriert ist, die im Verhältnis zu einer Achse versetzt ist, auf der die Verbindung des hinteren Rahmens und der Gitter zentriert ist, die dazu bestimmt sind, auf dem verbleibenden Umfang der Abdeckung (121) montiert zu werden.

3. Gondel nach einem der Ansprüche 1 bis 2, wobei der Versatz der Achsen zueinander, auf denen jeweils ein jedes Gitter (120) zentriert ist, derart konfiguriert ist, dass der radiale Abstand der Gitter (120) im Verhältnis zu ihrer jeweiligen Mitte auf dem gesamten Umfang der Strömungsbahn identisch ist.

4. Gondel nach einem der Ansprüche 1 bis 3, wobei der vordere Rahmen ein Element umfasst, das einen Träger für Umleitgitter (120) bildet, der ausgeformt ist, um auf einer ersten Achse im Bereich des verringerten Querschnitts der Abdeckung (121), und einer zweiten Achse auf dem verbleibenden Umfang der Abdeckung (121) zentriert zu werden, die im Verhältnis zur ersten Achse versetzt ist.

5. Gondel nach einem der Ansprüche 2 bis 4, wobei der hintere Rahmen ein Element umfasst, das einen Träger für Umleitgitter bildet, der ausgeformt ist, um auf einer dritten Achse im Bereich des verringerten Querschnitts der Abdeckung, und einer vierten Achse auf dem verbleibenden Umfang der Abdeckung zentriert zu werden, die im Verhältnis zur dritten Achse versetzt ist.

6. Gondel nach einem der Ansprüche 1 bis 4, wobei das stromaufwärts und/ oder stromabwärts befindliche Ende der Gitter (120) ausgeformt ist, um auf einer fünften Achse im Bereich des verringerten Querschnitts der Abdeckung (121), und einer sechsten Achse auf dem verbleibenden Umfang der Abdeckung (121) zentriert zu werden, die im Verhältnis zur fünften Achse versetzt ist.

7. Gondel nach den Ansprüchen 4 bis 6, wobei die zweite, die vierte und die sechste Achse der Längsachse der Gondel entsprechen.

8. Gondel nach Anspruch 1, wobei die Abdeckung (121) einen Bereich mit einem verringerten Querschnitt beiderseits eines oberen und/ oder unteren Trägers aufweist, die mit der Gondel verbunden sind.

9. Gondel nach den Ansprüchen 2 und 8, wobei sich die Achse (O"), auf der die Verbindung des vorderen Rahmens oder des hinteren Rahmens und der Umleitgitter (120) zentriert ist, die dazu bestimmt sind, im Bereich des oberen verringerten Querschnitts der Abdeckung (121) montiert zu werden, von der Achse (O') unterscheidet, auf der die Verbindung des vorderen Rahmens, oder beziehungsweise des hinteren Rahmens, und der Umleitgitter (121) zentriert ist, die dazu bestimmt sind, im Bereich des unteren verringerten Querschnitts der Abdeckung montiert zu werden.

10. Gondel nach Anspruch 1, wobei die Umleitgitter zumindest teilweise in Längsrichtung oder in Drehrichtung beweglich sind.

## Claims

1. A nacelle, comprising:
- an outer structure (102) provided with a thrust reverser device (100) and a front frame,
- an inner structure (103) intended to cover a downstream section of a turbojet engine,
the outer structure and the inner structure defining a flow path (104) of an air flow of a turbojet engine,
the thrust reverser device (100) comprising at least:
- a cowl (121) movable in translation along a direction parallel to a longitudinal axis of the nacelle, the cowl being able to alternately switch from a closed position in which it ensures the aerodynamic continuity of the front frame to an open position in which it opens a passage in the nacelle intended for the air flow to be diverted, said cowl having a non-constant cross-section on the periphery of the path,
- the cascade vanes (120) of at least one part of the air flow of the turbojet engine through the passage opening, intended to be mounted on the front frame at their upstream end,
the nacelle is **characterized in that** the connection of the front frame and the cascade vanes (120) intended to be mounted on the reduced cross-section area of the cowl (121) is centered on a first axis shifted relative to a second axis on which is centered the connection of the front frame and the cascade vanes (120) intended to be mounted on the rest of the periphery of the cowl (121).

2. The nacelle according to claim 1 wherein the outer structure (103) further comprises a rear frame on which a downstream end of each cascade vane (120) is mounted, the connection of the rear frame and the cascade vanes (120) intended to be mounted on the reduced cross-section area of the cowl (121) is centered on an axis shifted relative to an axis on which is centered the connection of the rear frame and the cascades intended to be mounted on the rest of the periphery of the cowl (121).

3. The nacelle according to any of claims 1 to 2 wherein the relative shift of the axes on which is respectively centered each cascade (120) is configured so that the radial distance of the cascades (120) relative to their respective center is identical on the entire periphery of the path.

4. The nacelle according to any of claims 1 to 3 wherein the front frame comprises an element forming a support for cascade vane (120) shaped to be centered on a first axis in the reduced section area of the cowl (121) and a second axis on the rest of the periphery of the cowl (121), shifted relative to the first axis.

5. The nacelle according to any of claims 2 to 4 wherein the rear frame comprises an element forming a support for cascade vane shaped to be centered on a third axis in the reduced section area of the cowl and a fourth axis on the rest of the periphery of the cowl, shifted relative to the third axis.

6. The nacelle according to any of claims 1 to 4 wherein the upstream and/or downstream end of the cascades (120) is shaped to be centered on a fifth axis in the reduced section area of the cowl (121) and a sixth axis on the rest of the periphery of the cowl (121), shifted relative to the fifth axis.

7. The nacelle according to claims 4 to 6 wherein the second, the fourth and the sixth axes correspond to the longitudinal axis of the nacelle.

8. The nacelle according to claim 1 wherein the cowl (121) has a reduced cross-section area on both sides of upper and/or lower beam(s) connected to the nacelle.

9. The nacelle according to claims 2 and 8 wherein the axis (O") on which is centered the connection of the front frame or rear frame and the cascade vanes (120) intended to be mounted on the reduced upper cross-section area of the cowl (121) is different from the axis (O') on which is centered the connection of the front frame, or respectively rear frame, and the cascade vanes (121) intended to be mounted on the reduced lower cross-section area of the cowl.

10. The nacelle according to claim 1 wherein the cascade vanes are, at least in part, movable in translation or in rotation.
